# FASCICULE DE BREVET EUROPEEN

(11) **EP 4 149 804 B1**
(45) Date de publication et mention de la délivrance du brevet: **26.03.2025**
(21) Numéro de dépôt: 21724631.3
(22) Date de dépôt: 06.05.2021
(51) Int. Cl.: B60T 8/17, B60T 13/74

(54) **ARCHITECTURE DISTRIBUÉE DE SYSTÈME DE FREINAGE POUR AÉRONEF**
VERTEILTE ARCHITEKTUR EINES FLUGZEUGBREMSSYSTEMS
DISTRIBUTED ARCHITECTURE OF AIRCRAFT BRAKING SYSTEM

(30) Priorité: 12.05.2020 FR 2004674
(43) Date de publication de la demande: 22.03.2023
(73) Titulaire: Safran Landing Systems, 78140 Vélizy-Villacoublay (FR)
(72) Inventeur: ONFROY, Dominique, 77550 Moissy-Cramayel (FR); FREY, Olivier, 77550 Moissy-Cramayel (FR); GOYEZ, Brian, 77550 Moissy-Cramayel (FR)
(74) Mandataire: Cabinet Boettcher
(86) Numéro de dépôt international: PCT/EP2021/062084
(87) Numéro de publication internationale: WO 2021/228696

(56) Documents cités:
- EP-A1- 2 463 166
- EP-A1- 2 641 791
- EP-A1- 2 719 592
- EP-A1- 3 176 083
- EP-A1- 3 483 063
- EP-A1- 3 632 795
- FR-A1- 3 063 187

## Description

L'invention concerne le domaine des systèmes de freinage électriques d'aéronef.

### ARRIERE PLAN DE L'INVENTION

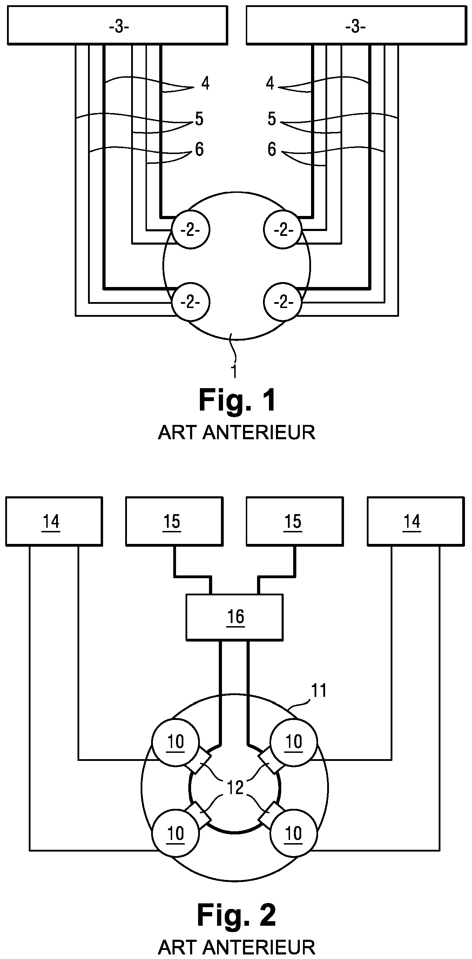

Une architecture classique de système de freinage électrique d'aéronef, dite « centralisée », est visible sur la figure 1.

Dans cette architecture, chaque frein 1, destiné à freiner une roue de l'aéronef, comporte des organes de friction (une pile de disques de carbone par exemple) ainsi que quatre actionneurs électromécaniques 2 qui sont regroupés en deux groupes distincts de deux actionneurs électromécaniques 2. Les actionneurs électromécaniques 2 d'un même groupe sont reliés à un même calculateur centralisé 3 situé dans la soute de l'aéronef.

Le pilote de l'aéronef (ou bien le système de pilotage automatique) génère une consigne de freinage.

Chaque calculateur centralisé 3 acquiert la consigne de freinage et exécute le contrôle et la commande des actionneurs électromécaniques 2 auxquels il est relié. Le contrôle et la commande des actionneurs électromécaniques 2 mettent en œuvre une ou plusieurs boucles d'asservissement.

Le calculateur centralisé 3 génère ainsi un courant électrique triphasé d'alimentation à destination du moteur électrique de chaque actionneur électromécanique 2 auquel il est relié. Le courant électrique triphasé d'alimentation est transmis au moteur électrique qui actionne alors le poussoir dudit actionneur électromécanique 2. Le poussoir coulisse, applique un effort de freinage sur les organes de friction du frein 1, et exerce ainsi un couple de freinage sur la roue.

Chaque calculateur centralisé 3 acquiert par ailleurs des mesures d'un ou de plusieurs paramètres d'asservissement, qui sont réalisées par des capteurs situés dans chaque actionneur électromécanique 2 auquel le calculateur centralisé 3 est relié (ou bien à proximité : sur le frein 1, sur la roue, etc.). Ces mesures comprennent par exemple des mesures de la position angulaire du rotor du moteur électrique. Ces mesures constituent des signaux de retour de la ou des boucles d'asservissement qui viennent d'être évoquées.

Cette architecture centralisée présente un certain nombre d'inconvénients.

L'architecture nécessite l'utilisation de neuf fils électriques au moins par actionneur électromécanique 2 : trois fils d'alimentation 4 pour les trois phases du moteur électrique (symbolisés sur la figure 1 par un unique trait), quatre fils de communication 5 (symbolisés sur la figure 1 par un unique trait) pour remonter au calculateur centralisé 3 les mesures des paramètres d'asservissement, et deux fils d'alimentation 6 (symbolisés sur la figure 1 par un unique trait) pour alimenter un organe de blocage de l'actionneur électromécanique 2 permettant de mettre en œuvre un freinage de parc. Ces fils électriques sont intégrés dans des harnais qui cheminent depuis la soute de l'aéronef vers le frein 1 et qui sont donc encombrants et pesants. La longueur importante des harnais, dans lesquels cheminent les fils d'alimentation 4 et donc les courants d'alimentation des moteurs électriques, impose d'utiliser des circuits de filtrage pour la compatibilité électromagnétique qui augmentent la masse, la complexité et le coût des calculateurs centralisés 3.

Pour pallier ces inconvénients, il a été envisagé d'utiliser une architecture distribuée telle que celle visible sur la figure 2.

Dans cette architecture, chaque actionneur électromécanique 10 du frein 11 comporte, outre le moteur électrique et le poussoir, un module de puissance et un module de communication numérique 12. Les modules de communication numérique 12 des actionneurs électromécaniques 10 du frein 11 sont interconnectés pour former un réseau numérique. L'architecture comprend aussi deux unités d'alimentation 14 destinées à alimenter les modules de puissance des actionneurs électromécaniques 10 du frein 11 en leur fournissant une tension **d'alimentation,** ainsi que deux unités de commande 15 adaptées à générer des signaux numériques de commande des moteurs électriques à destination des modules de communication numérique 12. Le module de communication numérique 12 de chaque actionneur électromécanique 10 transmet les signaux numériques de commande au module de puissance de sorte que chaque module de puissance génère le courant d'alimentation à partir de la tension d'alimentation et des signaux numériques de commande qui lui sont destinés. L'architecture comprend enfin un organe d'interconnexion réseau 16 relié aux deux unités de commande 15 et intégré dans le réseau numérique pour distribuer les signaux numériques de commande aux modules de communication numérique 12 des actionneurs électromécaniques 10 via le réseau numérique. Dans cette architecture, la génération des courants d'alimentation des moteurs électriques est donc « distribuée » dans les actionneurs électromécaniques.

Cette architecture est très intéressante et permet de résoudre les problèmes évoqués plus tôt.

Cependant, cette architecture présente elle aussi quelques inconvénients.

En particulier, on voit que l'organe de connexion 16 forme un « point commun » dans la chaîne de commande intégrant les deux unités de commande 15, de sorte qu'une panne simple au niveau de cet organe de connexion 16 peut conduire à une perte totale de freinage sur la roue.

Par ailleurs, il a été envisagé de positionner l'organe de connexion 16 à proximité de la roue au bas de l'atterrisseur. Cette position est problématique, car la zone en question subit des conditions environnementales particulièrement sévères et est donc peu propice à accueillir de l'électronique. De plus, cette zone comporte très peu d'espace disponible, ce qui complexifie l'intégration « physique » de l'organe de connexion 16 sur l'atterrisseur.

Des exemples d'architecture de système de freinage pour aéronef sont divulgués dans les documents EP 3 632 795 A1, EP 3 483 063 A1 et EP 3 176 083 A1.

### OBJET DE L'INVENTION

L'invention a pour objet une architecture de système de freinage pour aéronef, qui bénéficie des avantages d'une architecture distribuée sans subir les inconvénients qui viennent d'être évoqués.

### RESUME DE L'INVENTION

En vue de la réalisation de ce but, on propose une architecture de système de freinage pour aéronef, comportant :
- un frein destiné à freiner une roue de l'aéronef, le frein comprenant des organes de friction et une pluralité d'actionneurs électromécaniques pour appliquer un effort de freinage sur les organes de friction et exercer ainsi un couple de freinage sur la roue, chaque actionneur électromécanique comportant un moteur électrique, un module de puissance pour générer un courant d'alimentation du moteur électrique et un module de communication numérique ;
- au moins une unité d'alimentation destinée à alimenter les modules de puissance en leur fournissant une tension d'alimentation ;
- deux unités de contrôle, chaque unité de contrôle étant reliée à un groupe distinct d'un ou de plusieurs actionneurs électromécaniques et comportant un module de communication numérique amont, un module de commande agencé pour générer des signaux numériques de commande, et un module de communication numérique aval connecté aux modules de communication numérique des actionneurs électromécaniques dudit groupe pour transmettre les signaux numériques de commande aux modules de puissance desdits actionneurs électromécaniques, de sorte que chaque module de puissance génère le courant d'alimentation à partir de la tension d'alimentation et des signaux numériques de commande ;
- un réseau de communication numérique auquel sont connectés les modules de communication numérique amont des deux unités de contrôle.

Ainsi, dans l'architecture selon l'invention, les courants d'alimentation des moteurs électriques sont générés à l'intérieur des actionneurs électromécaniques, ce qui permet de bénéficier des avantages de l'architecture distribuée qui vient d'être décrite.

Cette architecture permet aussi de bénéficier des avantages des architectures centralisées.

En particulier, les actionneurs électromécaniques d'un même frein peuvent être commandés par des unités de contrôle intégrées dans deux boîtiers différents, sans que cette architecture nécessite un équipement individuel remplissant la fonction de l'organe de connexion évoqué plus tôt. On évite ainsi la perte de freinage sur une roue en cas de panne simple.

On améliore donc la fiabilité du système de freinage en réduisant l'électronique positionnée en bas de train, et on simplifie l'intégration du système. On réduit aussi les coûts récurrents du système de freinage en réduisant le nombre d'équipements dudit système.

On propose de plus une architecture telle que celle qui vient d'être décrite, dans laquelle le frein comporte deux groupes distincts de deux actionneurs électromécaniques, et dans laquelle chaque unité de contrôle est reliée aux deux actionneurs électromécaniques de l'un des deux groupes distincts pour les piloter.

On propose de plus une architecture telle que celle qui vient **d'être** décrite, comportant une pluralité de freins destinés chacun à freiner une roue distincte de l'aéronef, deux unités de contrôle associées à chaque frein, ainsi que des boîtiers intégrant chacun deux unités de contrôle.

On propose de plus une architecture telle que celle qui vient d'être décrite, dans laquelle les deux unités de contrôle associées à un même frein sont intégrées dans deux boîtiers différents.

On propose de plus une architecture telle que celle qui vient d'être décrite, dans laquelle deux unités de contrôle intégrées dans un même boîtier sont au moins partiellement dissimilaires dans leur conception matérielle et/ou logicielle.

On propose de plus une architecture telle que celle qui vient d'être décrite, dans laquelle deux unités de contrôle associées à un même frein sont au moins partiellement dissimilaires dans leur conception matérielle et/ou logicielle.

On propose de plus une architecture telle que celle qui vient d'être décrite, dans laquelle les actionneurs électromécaniques du frein sont agencés pour transmettre aux modules de commande des unités de contrôle des signaux numériques de mesure via les modules de communication numériques des actionneurs électromécaniques et les modules de communication numériques aval des unités de contrôle.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente un frein et deux calculateurs centralisés dans une architecture centralisée de l'art antérieur ;
- la figure 2 représente un frein, deux unités d'alimentation, deux unités de commande et un organe d'interconnexion dans une architecture distribuée de l'art antérieur ;
- la figure 3 représente un frein, deux unités d'alimentation, deux unités de contrôle et un réseau de communication numérique dans une architecture selon l'invention ;
- la figure 4 est une figure similaire à la figure 3, avec deux freins et quatre unités de contrôle intégrées dans deux boîtiers.

### DESCRIPTION DETAILLEE DE L'INVENTION

L'invention est ici mise en œuvre dans un avion qui comporte une pluralité d'atterrisseurs principaux portant chacun une pluralité de roues dites « freinées », c'est à dire une pluralité de roues équipées chacune d'un frein pour freiner l'avion.

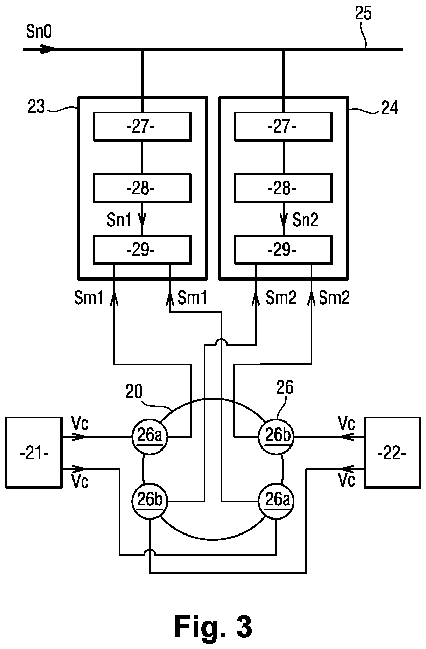

En référence à la figure 3, l'architecture de système de freinage selon l'invention comporte ici, pour chaque roue freinée de l'avion, un frein 20, une première unité d'alimentation 21, une deuxième unité d'alimentation 22, une première unité de contrôle 23, une deuxième unité de contrôle 24, et un réseau de communication numérique 25 de plus haut niveau (ou HLN, pour *High Level Network*).

Le frein 20 comporte un porte-actionneurs sur lequel sont montés quatre actionneurs électromécaniques de freinage 26 et des organes de friction, en l'occurrence une pile de disques de carbone.

Les quatre actionneurs électromécaniques 26 sont utilisés pour appliquer un effort de freinage sur la pile de disques de carbone et exercer ainsi un couple de freinage sur la roue, qui ralentit la rotation de la roue et donc freine l'avion lorsque celui-ci est au sol.

Chaque actionneur électromécanique 26 comporte un corps fixé au porte-actionneurs, un poussoir et un organe de blocage adapté à bloquer en position le poussoir. Un moteur électrique, un module de puissance et un module de communication numérique sont intégrés à l'intérieur du corps de chaque actionneur électromécanique 26.

Le poussoir est actionné par le moteur électrique pour coulisser et appliquer un effort de freinage sur la pile de disques de carbone.

Le module de puissance permet de générer un courant d'alimentation alternatif qui circule dans trois phases du moteur électrique lorsqu'il convient d'actionner le poussoir et donc de freiner la roue. Le module de puissance comporte à cet effet un onduleur comprenant une pluralité d'interrupteurs qui sont commandés de manière à transformer une tension d'alimentation continue Vc en une tension alternative triphasée sous laquelle est généré le courant d'alimentation du moteur électrique.

Les quatre actionneurs électromécaniques 26 sont regroupés en un premier groupe et un deuxième groupe distincts, le premier groupe comprenant les deux actionneurs électromécaniques 26a et le deuxième groupe comprenant les deux actionneurs électromécaniques 26b.

Par « groupes distincts », on entend qu'un actionneur électromécanique qui appartient à un groupe n'appartient pas à l'autre groupe.

On note que, lorsque le frein 20 est vu de l'arrière et de face comme c'est le cas sur la figure 3, le premier groupe comprend un actionneur électromécanique 26a situé sur une partie supérieure gauche et un actionneur électromécanique 26a situé sur une partie inférieure droite du porte-actionneurs, alors que le deuxième groupe comprend un actionneur électromécanique 26b situé sur une partie supérieure droite et un actionneur électromécanique 26b situé sur une partie inférieure gauche du porte-actionneurs. Ainsi, la perte de l'un des groupes, causée par exemple par la perte partielle de la chaîne de commande, conduit à perdre la moitié du freinage de la roue mais à conserver du freinage à gauche et à droite, et dans les parties supérieure et inférieure du frein 20.

La première unité d'alimentation 21 et la deuxième unité d'alimentation 22 sont destinées à alimenter les modules de puissance des quatre actionneurs électromécaniques 26.

La première unité d'alimentation 21 fournit la tension d'alimentation Vc aux modules de puissance des actionneurs électromécaniques 26a du premier groupe, alors que la deuxième unité d'alimentation 22 fournit la tension d'alimentation Vc aux modules de puissance des actionneurs électromécaniques 26b du deuxième groupe.

La première unité d'alimentation 21 et la deuxième unité d'alimentation 22 sont positionnées en soute, dans le fuselage de l'avion, en haut de l'atterrisseur.

De même, la première unité de contrôle 23 et la deuxième unité de contrôle 24 sont positionnées en soute.

La première unité de contrôle 23 et la deuxième unité de contrôle 24 comportent chacune un module de communication numérique amont 27, un module de commande 28 et un module de communication numérique aval 29.

La première unité de contrôle 23 est reliée aux actionneurs électromécaniques 26a du premier groupe pour les piloter. La deuxième unité de contrôle 24 est reliée aux actionneurs électromécaniques 26b du deuxième groupe pour les piloter.

Le module de communication numérique aval 29 de la première unité de contrôle 23 est connecté aux modules de communication numérique des actionneurs électromécaniques 26a du premier groupe. Le module de communication numérique aval 29 de la deuxième unité de contrôle 24 est connecté aux modules de communication numérique des actionneurs électromécaniques 26b du deuxième groupe.

Le module de communication numérique amont 27 de la première unité de contrôle 23 et le module de communication numérique amont 27 de la deuxième unité de contrôle 24 sont connectés au réseau de communication numérique 25.

Ainsi, lorsqu'un pilote de l'avion ou le système de pilotage automatique produit une consigne de freinage, la consigne de freinage est transformée en un signal numérique de consigne Sn0 qui circule sur le réseau de communication numérique 25.

Le module de communication numérique amont 27 de la première unité de contrôle 23 acquiert le signal numérique de consigne Sn0 et le transmet au module de commande 28 de la première unité de contrôle 23. Le module de commande 28 met en œuvre une ou plusieurs boucles d'asservissement et génère des premiers signaux numériques de commande Sn1. Les premiers signaux numériques de commande Sn1 sont transmis au module de communication numérique aval 29 de la première unité de contrôle 23, qui les transmet aux actionneurs électromécaniques 26a du premier groupe.

Le module de communication numérique de chaque actionneur électromécanique 26a du premier groupe acquiert les premiers signaux numériques de commande Sn1 et les transmet au module de puissance dudit actionneur électromécanique 26a. Le module de puissance de l'actionneur électromécanique 26a génère le courant d'alimentation à partir de la tension d'alimentation Vc et des premiers signaux numériques de commande Sn1. Le courant d'alimentation alimente le moteur électrique qui actionne le poussoir de l'actionneur électromécanique 26a pour freiner la roue.

Des mesures de paramètres d'asservissement sont réalisées dans chaque actionneur électromécanique 26a. Ces mesures sont par exemple des mesures de la position angulaire et/ou de la vitesse angulaire du rotor du moteur électrique, des mesures du courant d'alimentation, des mesures de la position du poussoir, etc. Ces mesures sont numérisées et forment des premiers signaux numériques de mesure Sm1 transmis par l'actionneur électromécanique 26a au module de commande 28 de la première unité de contrôle 23 via le module de communication numérique de l'actionneur électromécanique 26a et le module de communication numérique aval 29 de la première unité de contrôle 23.

Ces premiers signaux numériques de mesure Sm1 constituent des signaux de retour de la ou des boucles d'asservissement qui viennent d'être évoquées.

De même, le module de communication numérique amont 27 de la deuxième unité de contrôle 24 acquiert le signal numérique de consigne Sn0 et le transmet au module de commande 28 de la deuxième unité de contrôle 24. Le module de commande 28 met en œuvre une ou plusieurs boucles d'asservissement et génère des deuxièmes signaux numériques de commande Sn2. Les deuxièmes signaux numériques de commande Sn2 sont transmis au module de communication numérique aval 29 de la deuxième unité de contrôle 24, qui les transmet aux actionneurs électromécaniques 26b du deuxième groupe.

Le module de communication numérique de chaque actionneur électromécanique 26b du deuxième groupe acquiert les deuxièmes signaux numériques de commande Sn2 et les transmet au module de puissance dudit actionneur électromécanique 26b. Le module de puissance de l'actionneur électromécanique 26b génère le courant d'alimentation à partir de la tension d'alimentation Vc et des deuxièmes signaux numériques de commande Sn2. Le courant d'alimentation alimente le moteur électrique qui actionne le poussoir de l'actionneur électromécanique 26b pour freiner la roue.

Des mesures de paramètres d'asservissement sont réalisées dans chaque actionneur électromécanique 26b. Ces mesures sont par exemple des mesures de la position angulaire et/ou de la vitesse angulaire du rotor du moteur électrique, des mesures du courant d'alimentation, des mesures de la position du poussoir, etc. Ces mesures sont numérisées et forment des deuxièmes signaux numériques de mesure Sm2 transmis par l'actionneur électromécanique 26b au module de commande 28 de la deuxième unité de contrôle 24 via le module de communication numérique de l'actionneur électromécanique 26b et le module de communication numérique aval 29 de la deuxième unité de contrôle 24. Ces deuxièmes signaux numériques de mesure Sm2 constituent des signaux de retour de la ou des boucles d'asservissement qui viennent d'être évoquées.

On note que les premiers signaux numériques de commande Sn1 et les deuxièmes signaux numériques de commande Sn2 peuvent être identiques ou bien différents et donc propres aux actionneurs électromécaniques 26a du premier groupe et aux actionneurs électromécaniques 26b du deuxième groupe.

De même, au sein des premiers signaux numériques de commande Sn1, les signaux numériques de commande à destination de chacun des actionneurs électromécaniques 26a peuvent être identiques ou bien différents. Au sein des deuxièmes signaux numériques de commande Sn2, les signaux numériques de commande à destination de chacun des actionneurs électromécaniques 26b peuvent être identiques ou bien différents.

Les différents actionneurs électromécaniques 26 du frein sont donc commandés par deux unités de contrôle 23, 24. Les deux unités de contrôle 23 et 24, tout comme les modules de communication numérique des actionneurs électromécaniques 26, sont interconnectées par le réseau de communication numérique 25.

Avantageusement, l'architecture comprend deux unités de contrôle associées à chaque frein, ainsi que des boîtiers intégrant chacun deux unités de contrôle. Chaque boîtier, ainsi que les deux unités de contrôle intégrées dans ledit boîtier, forment donc un même équipement.

Les deux unités de contrôle reliées aux actionneurs électromécaniques d'un même frein sont intégrées dans deux boîtiers différents.

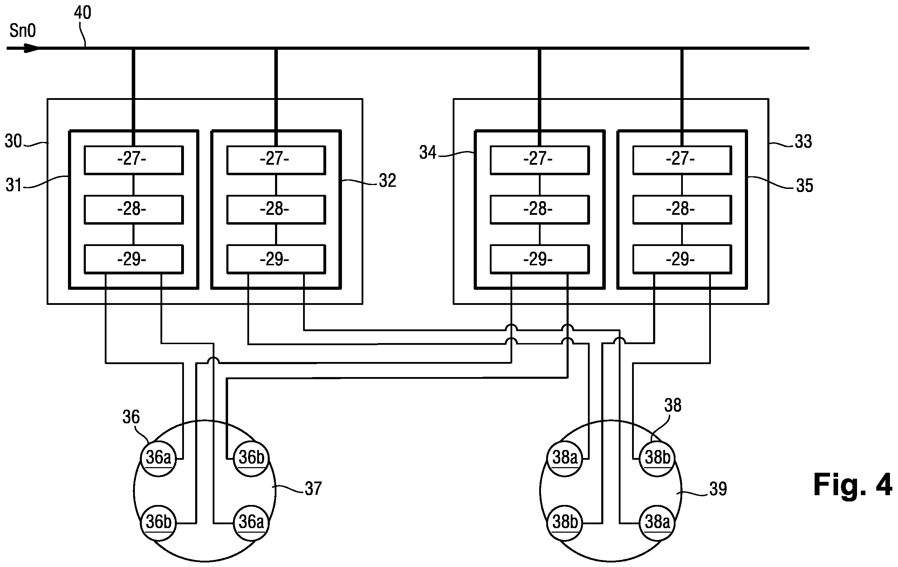

Ainsi, sur la figure 4, le premier boîtier 30 comprend une première unité de contrôle 31 et une deuxième unité de contrôle 32, et le deuxième boîtier 33 comprend une première unité de contrôle 34 et une deuxième unité de contrôle 35. On note que les unités d'alimentation ne sont pas représentées sur la figure 4 pour plus de lisibilité.

La première unité de contrôle 31 du premier boîtier 30 est reliée aux actionneurs électromécaniques 36a du premier groupe d'actionneurs électromécaniques du premier frein 37 pour les piloter. La deuxième unité de contrôle 32 du premier boîtier 30 est reliée aux actionneurs électromécaniques 38a du premier groupe d'actionneurs électromécaniques du deuxième frein 39 pour les piloter.

De même, la première unité de contrôle 34 du deuxième boîtier 33 est reliée aux actionneurs électromécaniques 36b du deuxième groupe d'actionneurs électromécaniques du premier frein 37 pour les piloter. La deuxième unité de contrôle 35 du deuxième boîtier 33 est reliée aux actionneurs électromécaniques 38b du deuxième groupe d'actionneurs électromécaniques du deuxième frein 39 pour les piloter.

La première unité de contrôle 31 et la deuxième unité de contrôle 32 du premier boîtier 30, ainsi que la première unité de contrôle 34 et la deuxième unité de contrôle 35 du deuxième boîtier 33, sont à nouveau connectées à un réseau de communication numérique 40.

Le premier boîtier 30 et le deuxième boîtier 33 sont identiques, ce qui simplifie la gestion des équipements. La première unité de contrôle 31 et la deuxième unité de contrôle 35 sont identiques. La deuxième unité de contrôle 32 et la première unité de contrôle 34 sont identiques.

Avantageusement, deux unités de contrôle intégrées dans un même boîtier sont au moins partiellement dissimilaires dans leur conception matérielle et/ou logicielle.

Ainsi, la première unité de contrôle 31 et la deuxième unité de contrôle 32, qui sont intégrées dans le premier boîtier 30, sont au moins partiellement dissimilaires dans leur conception matérielle et/ou logicielle (c'est-à-dire qu'elles comportent un ou plusieurs composants électroniques et/ou un ou plusieurs modules logiciels différents). La première unité de contrôle 34 et la deuxième unité de contrôle 35, qui sont intégrées dans le deuxième boîtier 33, sont au moins partiellement dissimilaires dans leur conception matérielle et/ou logicielle.

De même, deux unités de contrôle associées à un même frein sont au moins partiellement dissimilaires dans leur conception matérielle et/ou logicielle.

Ainsi, la première unité de contrôle 31 et la première unité de contrôle 34, qui sont associées au premier frein 37, sont au moins partiellement dissimilaires dans leur conception matérielle et/ou logicielle. La deuxième unité de contrôle 32 et la deuxième unité de contrôle 35, qui sont associées au deuxième frein 39, sont au moins partiellement dissimilaires dans leur conception matérielle et/ou logicielle.

Ces dissimilarités permettent d'éviter qu'une panne de mode commun d'un composant d'une unité de contrôle ne puisse conduire à la perte totale du freinage commandé par un boîtier : la panne de mode commun de toutes les unités de contrôle d'un même type amène à perdre le freinage sur deux actionneurs par frein, ce qui est préférable à une perte de freinage sur un frein complet.

L'architecture de système de freinage est donc basée sur deux niveaux de communication numérique, permettant d'intégrer les différents modules fonctionnels dans un minimum de boîtiers tout en permettant la distribution du contrôle des actionneurs électromécaniques d'un même frein dans des boîtiers différents.

Bien entendu, l'invention n'est pas limitée au mode de réalisation décrit mais englobe toute variante entrant dans le champ de l'invention telle que définie par les revendications.

Il est bien sûr possible de prévoir un nombre d'actionneurs électromécaniques par frein différent de quatre. Chaque boîtier peut aussi intégrer un nombre d'unités de contrôle différent de deux. Chaque unité de contrôle peut piloter un nombre d'actionneurs électromécaniques différent de deux. Le nombre d'actionneurs électromécaniques piloté par chaque unité de contrôle peut être différent selon les unités de contrôle.

## Revendications

1. Architecture de système de freinage pour aéronef, comportant :
- un frein (20 ; 37, 39) destiné à freiner une roue de l'aéronef, le frein comprenant des organes de friction et une pluralité d'actionneurs électromécaniques (26 ; 36, 38) pour appliquer un effort de freinage sur les organes de friction et exercer ainsi un couple de freinage sur la roue, chaque actionneur électromécanique comportant un moteur électrique, un module de puissance pour générer un courant d'alimentation du moteur électrique et un module de communication numérique ;
- au moins une unité d'alimentation (21, 22) destinée à alimenter les modules de puissance en leur fournissant une tension d'alimentation (Vc) ;
- deux unités de contrôle (23, 24 ; 31, 32, 34, 35), chaque unité de contrôle étant reliée à un groupe distinct d'un ou de plusieurs actionneurs électromécaniques et comportant un module de communication numérique amont (27), un module de commande (28) agencé pour générer des signaux numériques de commande (Sn1, Sn2), et un module de communication numérique aval (29) connecté aux modules de communication numérique des actionneurs électromécaniques dudit groupe pour transmettre les signaux numériques de commande aux modules de puissance desdits actionneurs électromécaniques, de sorte que chaque module de puissance génère le courant d'alimentation à partir de la tension d'alimentation et des signaux numériques de commande ;
- un réseau de communication numérique (25 ; 40) auquel sont connectés les modules de communication numérique amont (27) des deux unités de contrôle.

2. Architecture selon la revendication 1, dans laquelle le frein comporte deux groupes distincts de deux actionneurs électromécaniques (26a, 26b), et dans laquelle chaque unité de contrôle est reliée aux deux actionneurs électromécaniques de l'un des deux groupes distincts pour les piloter.

3. Architecture selon l'une des revendications précédentes, comportant une pluralité de freins (37, 39) destinés chacun à freiner une roue distincte de l'aéronef, deux unités de contrôle (31, 32, 34, 35) associées à chaque frein, ainsi que des boîtiers (30, 33) intégrant chacun deux unités de contrôle.

4. Architecture selon la revendication 3, dans laquelle les deux unités de contrôle associées à un même frein sont intégrées dans deux boîtiers différents.

5. Architecture selon la revendication 3, dans laquelle deux unités de contrôle intégrées dans un même boîtier sont au moins partiellement dissimilaires dans leur conception matérielle et/ou logicielle.

6. Architecture selon la revendication 3, dans laquelle deux unités de contrôle associées à un même frein sont au moins partiellement dissimilaires dans leur conception matérielle et/ou logicielle.

7. Architecture selon l'une des revendications précédentes, dans laquelle les actionneurs électromécaniques (26) du frein (20) sont agencés pour transmettre aux modules de commande (28) des unités de contrôle (23, 24) des signaux numériques de mesure (Sm1, Sm2) via les modules de communication numériques des actionneurs électromécaniques et les modules de communication numériques aval (29) des unités de contrôle.

## Patentansprüche

1. Bremssystemarchitektur für ein Luftfahrzeug, enthaltend:
- eine Bremse (20 ; 37, 39) zur Bremsung eines Rades des Luftfahrzeugs, wobei die Bremse Reibungsorgane und eine Mehrzahl von elektromechanischen Aktuatoren (26; 36, 38) umfasst, die dazu dienen, eine Bremskraft auf die Reibungsorgane aufzubringen und somit ein Bremsmoment auf das Rad auszuüben, wobei jeder elektromechanische Aktuator einen Elektromotor, ein Leistungsmodul zur Erzeugung eines Versorgungsstroms für den Elektromotor und ein digitales Kommunikationsmodul enthält;
- zumindest eine Versorgungseinheit (21, 22) zur Versorgung der Leistungsmodule mit einer Versorgungsspannung (Vc);
- zwei Kontrolleinheiten (23, 24 ; 31, 32, 34, 35), wobei jede Kontrolleinheit mit einer separaten Gruppe bestehend aus einem oder mehreren elektromechanischen Aktuatoren verbunden ist und Folgendes enthält: ein vorgeschaltetes digitales Kommunikationsmodul (27), ein zur Erzeugung von digitalen Steuersignalen (Sn1, Sn2) ausgelegtes Steuermodul (28) sowie ein nachgeschaltetes digitales Kommunikationsmodul (29), das an die digitalen Kommunikationsmodule der elektromechanischen Aktuatoren besagter Gruppe angeschlossen ist, um die digitalen Steuersignale an die Leistungsmodule der elektromechanischen Aktuatoren zu übertragen, sodass jedes Leistungsmodul den Versorgungsstrom aus der Versorgungsspannung und aus den digitalen Steuersignalen erzeugt;
- ein digitales Kommunikationsnetzwerk (25 ; 40), an welches die vorgeschalteten digitalen Kommunikationsmodule (27) beider Kontrolleinheiten angeschlossen sind.

2. Architektur nach Anspruch 1, in welcher die Bremse zwei separate Gruppen bestehend aus zwei elektromechanischen Aktuatoren (26a, 26b) enthält und in welcher jede Kontrolleinheit mit beiden elektromechanischen Aktuatoren aus einer der beiden separaten Gruppen verbunden ist, um diese anzusteuern.

3. Architektur nach einem der vorhergehenden Ansprüche, enthaltend eine Mehrzahl von Bremsen (37, 39), die jeweils dazu dienen, ein separates Rad des Luftfahrzeugs zu bremsen, zwei Kontrolleinheiten (31, 32, 34, 35), die jeweils einer Bremse zugeordnet sind, sowie Gehäuse (30, 33), in welchen jeweils zwei Kontrolleinheiten integriert sind.

4. Architektur nach Anspruch 3, wobei die beiden jeweils ein und derselben Bremse zugeordneten Kontrolleinheiten in zwei unterschiedlichen Gehäusen integriert sind.

5. Architektur nach Anspruch 3, wobei zwei in ein und demselben Gehäuse integrierte Kontrolleinheiten in ihrem Hardware- und/oder Softwaredesign zumindest teilweise unähnlich sind.

6. Architektur nach Anspruch 3, wobei zwei ein und derselben Bremse zugeordnete Kontrolleinheiten in ihrem Hardware- und/oder Softwaredesign zumindest teilweise unähnlich sind.

7. Architektur nach einem der vorhergehenden Ansprüche, wobei die elektromechanischen Aktuatoren (26) der Bremse (20) dafür ausgelegt sind, über die digitalen Kommunikationsmodule der elektromechanischen Aktuatoren und die vorgeschalteten digitalen Kommunikationsmodule (29) der Kontrolleinheiten digitale Messsignale (Sm1, Sm2) an die Steuermodule (28) der Kontrolleinheiten (23, 24) zu übertragen.

## Claims

1. An architecture for an aircraft braking system, the architecture comprising:
· a brake (20; 37, 39) for braking a wheel of the aircraft, the brake comprising friction members and a plurality of electromechanical actuators (26; 36, 38) for applying a braking force to the friction members and thus exerting a braking torque on the wheel, each electromechanical actuator comprising an electric motor, a power module for generating power supply current for the electric motor, and a digital communication module;
· at least one power supply unit (21, 22) for powering the power modules by delivering a power supply voltage (Vc) thereto;
· two control units (23, 24; 31, 32, 34, 35), each control unit being connected to a distinct group of one or more electromechanical actuators and comprising an upstream digital communication module (27), a control module (28) arranged to generate digital control signals (Sn1, Sn2), and a downstream digital communication module (29) connected to the digital communication modules of the electromechanical actuators of said group in order to transmit the digital control signals to the power modules of said electromechanical actuators, such that each power module generates power supply current based on the digital control signals and taken from the power supply voltage; and
· a digital communication network (25; 40) to which the upstream digital communication modules (27) of both control units are connected.

2. An architecture according to claim 1, wherein the brake comprises two distinct groups, each of two electromechanical actuators (26a, 26b), and wherein each control unit is connected to the two electromechanical actuators of a respective one of the two distinct groups in order to control them.

3. An architecture according to either preceding claim, comprising a plurality of brakes (37, 39), each for braking a distinct wheel of the aircraft, two control units (31, 32, 34, 35) associated with each brake, and also housings (30, 33) each incorporating two control units.

4. An architecture according to claim 3, wherein the two control units associated with a given brake are incorporated in two different housings.

5. An architecture according to claim 3, wherein the two control units incorporated in a given housing are of hardware and/or software designs that are dissimilar, at least in part.

6. An architecture according to claim 3, wherein the two control units associated with a given brake are of hardware and/or software designs that are dissimilar, at least in part.

7. An architecture according to any preceding claim, wherein the electromechanical actuators (26) of the brake (20) are arranged to transmit digital measurement signals (Sm1, Sm2) to the control modules (28) of the control units (23, 24) via the digital communication modules of the electromechanical actuators and the downstream digital communication modules (29) of the control units.
